# EUROPÄISCHE PATENTSCHRIFT

(11) **EP 2 834 908 B1**
(45) Veröffentlichungstag und Bekanntmachung des Hinweises auf die Patenterteilung: **13.07.2016**
(21) Anmeldenummer: 13713085.2
(22) Anmeldetag: 27.03.2013
(51) Int. Cl.: H02K 21/04, H02K 7/06, H02P 3/12, F16F 15/03, B60G 13/14, B60G 17/015, H02K 35/00

(54) **ELEKTRISCHER DÄMPFER**
ELECTRIC DAMPER
AMORTISSEUR ÉLECTRIQUE

(30) Priorität: 05.04.2012 DE 102012007120
(43) Veröffentlichungstag der Anmeldung: 11.02.2015
(73) Patentinhaber: Audi AG, 85045 Ingolstadt (DE)
(72) Erfinder: WILLEMS, Marco, 85053 Ingolstadt (DE)
(74) Vertreter: Reichert, Thomas Klaus
(86) Internationale Anmeldenummer: PCT/EP2013/000914
(87) Internationale Veröffentlichungsnummer: WO 2013/149710

(56) Entgegenhaltungen:
- WO-A1-2011/042085
- WO-A1-2012/031650
- DE-A1- 3 116 927
- DE-A1- 10 115 858
- JP-A- S6 223 400
- JP-A- H11 215 900
- JP-A- 2000 139 047
- JP-A- 2004 215 375
- JP-A- 2011 254 599

## Beschreibung

Die Erfindung betrifft einen elektrischen Dämpfer zum Dämpfen der Relativbewegung zwischen einer ersten und einer zweiten Masse gemäß der im Oberbegriff des Patentanspruches 1 angegebenen Art.

Das zugrunde liegende Wirkprinzip eines elektrischen Dämpfers zum Dämpfen der Relativbewegung zwischen einer ersten und einer zweiten Masse unter Verwendung eines Generators ist aus der DE 101 15 858 A1 bekannt. Ein Generator umfasst bekanntlich einen Stator und einen relativ zu diesem drehbaren Rotor sowie entsprechende Magnetfelderzeugungsmittel, wobei bei Drehung des Rotors relativ zum Stator aufgrund der Drehbewegung im Magnetfeld ein Strom induziert wird, mithin also Energie gewonnen wird. D.h., dass einerseits eine Dämpfung in Folge der zur Durchführung der Drehbewegung im Magnetfeld aufzubringenden Energie erfolgt, zum anderen wird die Energie in Form des generatorseitig erzeugten Stroms, der entsprechend ins Bordnetz eingespeist werden kann, genutzt. Aus der DE 101 15 858 A1 ist zudem bekannt, zwischen zwei Dämpferbauteilen ein Getriebe vorzusehen, welches eine Linearbewegung in eine Rotationsbewegung wandelt. Da der durch die Rotationsbewegung induzierte Strom geschwindigkeitsproportional ist, ergibt sich für den Dämpfer gemäß DE 101 15 858 A1 ein proportionaler Verlauf der Dämpferkraftlinie.

Die JP S62 23400 offenbart einen elektrischen Dämpfer zum Dämpfen der Relativbewegung zwischen einer ersten und einer zweiten Masse, der einen durch die Massenbewegung angetriebenen Generator umfasst. Weitere relevante elektrische Dämpfer sind aus der WO 2012/031650 A1, WO 2011/042085 A1 und JPH 11215900 A bekannt.

Der Erfindung liegt die Aufgabe zugrunde, einen elektrischen Dämpfer zum Dämpfen der Relativbewegung zwischen einer ersten und einer zweiten Masse gemäß der im Oberbegriff des Patentanspruches 1 angegebenen Art derart weiterzubilden, dass für hohe Dämpfergeschwindigkeiten die Dämpferkraftkennlinie einen degressiven Verlauf aufweist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst der elektrische Dämpfer zum Dämpfen der Relativbewegung zwischen einer ersten und einer zweiten Masse einen durch die Massenbewegung antreibbaren Generator.

Erfindungsgemäß ist zusätzlich zu den für die Induktion im Generator notwendigen primären Felderzeugungsmitteln eine weitere Erregerwicklung zur Erzeugung eines sekundären Magnetfelds vorgesehen, wobei die weitere Erregerwicklung derart angeordnet und bestromt ist, dass das primäre und sekundäre Magnetfeld entgegengesetzt ausgerichtete Feldlinien aufweisen. Zudem sind erfindungsgemäß der elektrische Leiter zur Führung des induzierten Stroms und die zusätzliche Erregerwicklung derart miteinander verschaltet, dass erst, wenn der induzierte Strom einen vorher bestimmten Schwellenwert überschreitet, ein Teil des induzierten Stroms in die weitere Erregerwicklung eingespeist wird.

Durch das erfindungsgemäße Vorsehen der weiteren Erregerwicklung und der entsprechenden Anordnung dieser, ist eine Beeinflussung der Feldstärke des primären Magnetfelds ermöglicht, d.h. der bei der Rotationsbewegung induzierte Strom und damit der Verlauf der Dämpferkennlinie ist beinflussbar. In besonders vorteilhafter Weise ist somit bei dem erfindungsgemäßen Dämpfer eine Einstellung der Dämpferkennlinie - d.h. auch ein degressiver Kennlinienverlauf - ermöglicht. Zudem ist sichergestellt, dass ab einem vorbestimmbaren Wert die weitere Erregerwicklung bestromt wird, was wiederum eine Abschwächung des Magnetfelds und damit einen degressiven Kennlinienverlauf verursacht.

Vorzugsweise sind die Felderzeugungsmittel als eine Erregerwicklung zur Fremderregung oder als permanentmagnetliche Elementen zur Eigenerregung ausgebildet.

Gemäß einer besonders vorteilhaften Ausführungsform der Erfindung ist der Generator in ein Getriebe integriert. Hierdurch ist in vorteilhafter Weise eine Beeinflussung bzw. Einstellung der Relativbewegung zwischen Stator und Rotor des Generators ermöglicht.

Das Getriebe kann auf unterschiedliche Weise ausgebildet sein, z.B. als ein Spannungswellengetriebe oder als ein Planetengetriebe oder als ein Zykloidgetriebe ausgebildet.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

Die Erfindung wird im Folgenden anhand den in der Zeichnung dargestellten Ausführungsbeispielen näher beschrieben.

In der Beschreibung, in den Ansprüchen und in der Zeichnung werden die in der unten aufgeführten Liste der Bezugszeichen verwendeten Begriffe und zugeordneten Bezugszeichen verwendet.

In der Zeichnung bedeutet:
- Fig. 1: ein Hebelelement einer Kraftfahrzeugaufhängung mit einem in einer Bohrung des Hebelelements integrierten erfindungsgemäßen elektrischen Dämpfer;
- Fig. 2: eine Draufsicht auf den erfindungsgemäßen Dämpfer aus Fig. 1;
- Fig. 3: eine Explosionsdarstellung des erfindungsgemäßen elektrischen Dämpfers aus Fig. 2;
- Fig. 4: eine Schaltungsanordnung für die weitere Erregerwicklung;
- Fig. 5: eine Prinzipdarstellung einer möglichen Verbausituation des erfindungsgemäßen Dämpfers im Bereich einer Kraftfahrzeugachse, und
- Fig. 6: eine schematische Darstellung einer weiteren Ausführungsform des erfindungsgemäßen Dämpfers.

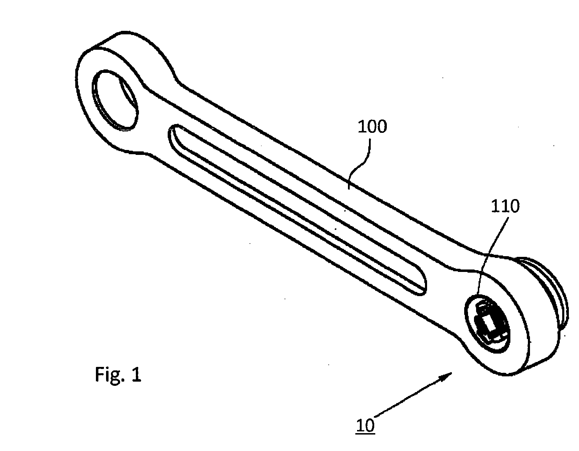

Fig. 1 zeigt ein Hebelelement 100 einer Kraftfahrzeugaufhängung eines Kraftfahrzeugs. Das Hebelelement 100 weist eine Bohrung 110 auf, in dem ein insgesamt mit der Bezugsziffer 10 bezeichneter Dämpfer integriert ist.

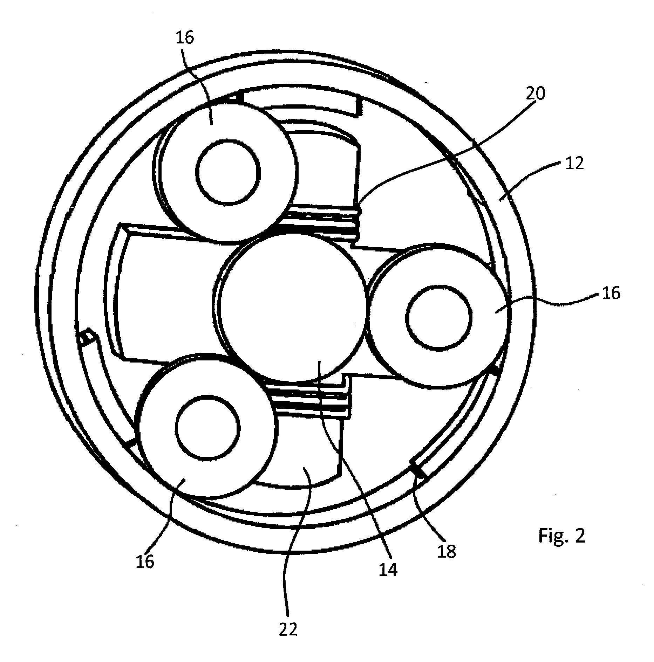

Wie Fig. 2 zu entnehmen ist, ist der Dämpfer 10 in Form eines Planetengetriebes ausgebildet und umfasst ein als Hohlrad ausgebildetes erstes Getriebeelement 12 sowie ein als Sonnenrad ausgebildetes zweites Getriebeelement 14. Das als Hohlrad ausgebildete erste Getriebeelement 12 ist dabei über seinen Außenumfang fest in der Bohrung 110 des Hebelelements 100 gelagert. Am Innenumfang weist das als Hohlrad ausgebildete erste Getriebeelement 12 eine - hier aus Gründen der Übersichtlichkeit nicht dargestellte - Innenverzahnung auf. Das in der Mitte angeordnete, als Sonnenrad ausgebildete zweite Getriebeelement 14 steht über drei Planetenräder 16 mit dem innenverzahnten Hohlrad 12 über die jeweils am Sonnenrad und den Planetenrädern vorhandene - hier aus Gründen der Übersichtlichkeit nicht dargestellte Außenverzahlung - kämmend in Eingriff.

In bekannter Art und Weise bedingt somit eine durch eine Schwenkbewegung des Hebelelements 100 initiierte Drehbewegung des als Hohlrad ausgebildeten erstes Getriebeelements 12 eine übersetzte, in Drehrichtung entgegengesetzte Drehbewegung des als Sonnenrad ausgebildeten zweiten Getriebeelements 14.

Wie Fig. 2 weiter zu entnehmen ist, umfasst der Dämpfer 10 weiterhin mehrere im Hohlrad, d.h. im ersten Getriebeelement 12 angeordnete Felderzeugungsmittel 18 zur Erzeugung eines primären Magnetfelds. Zudem weist das als Sonnenrad ausgebildete zweite Getriebeelement 14 einen Ankerwicklungen 20 aufweisenden Fortsatz in Form eines Ankers 22. D.h. in das Planetengetriebe ist ein Generator integriert, wobei das als Hohlrad ausgebildete erste Getriebeelement 12 als Stator und das das Sonnenrad ausgebildete zweite Getriebeelement 14 als Rotor fungiert, so dass in bekannter Art und Weise bei einer Drehbewegung des Ankers 22 im primären Magnetfeld in den Ankerwicklungen 20 ein Strom induziert wird.

Die Dämpferwirkung beruht darauf, dass sich der Rotor, d.h. das zweite Getriebeelement 14 im primären Magnetfeld dreht, wobei die dem System entzogenen Energie nicht verloren geht, sondern zu einem beachtlichen Teil durch Induktion des Stroms zurück gewonnen wird.

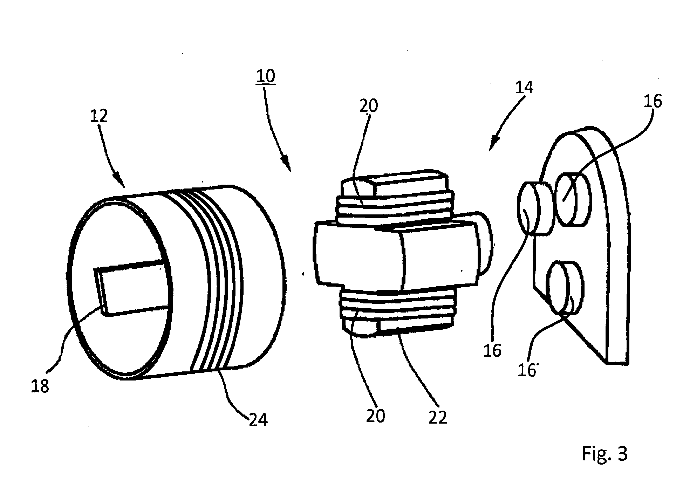

Wie Fig. 3 zu entnehmen ist, ist zudem eine weitere Erregerwicklung 24 vorgesehen, über die ein sekundäres Magnetfeld erzeugbar ist. Die zusätzliche Erregerwicklung 24 ist in Reihe zu den am ersten Getriebeelement 12 vorgesehenen Felderzeugungsmittel 18 zur Erzeugung des primären Magnetfelds angeordnet. Die Anordnung der zusätzlichen Erregerwicklung 24 sowie die Richtung des Stromdurchflusses durch die weitere Erregerwicklung 24 sind dabei so gewählt, dass die Feldlinien des sekundären Magnetfeldes entgegen gesetzt zu den Feldlinien des primären Magnetfeldes ausgerichtet sind.

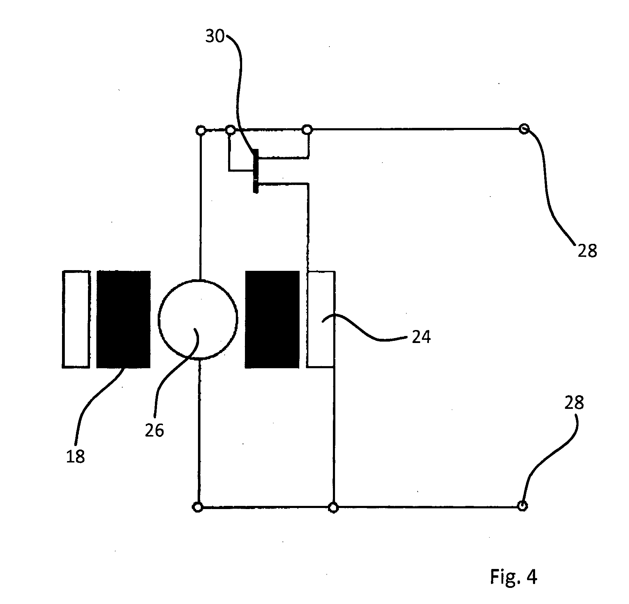

Die Verschaltung der weiteren Erregerwicklung ist schematisch in Fig. 4 dargestellt. In der schematischen Darstellung gemäß Fig. 4 bezeichnet die Bezugsziffer 18 die Felderzeugungsmittel zur Erzeugung des primären Magnetfelds, Bezugsziffer 24 die weitere Erregerwicklung zur Erzeugung des sekundären Magnetfelds und Bezugsziffer 26 den Generator.

Im Generator 26 wird durch eine Wechselwirkung mit dem primären Magnetfeld ein Strom induziert, der über die Verschaltung an die beiden Klemmen 28 abgeführt wird. Diese Klemmen können z. B. an das Bordnetz angeschlossen werden.

Die weitere Erregerwicklung 24 wird erst dann mit Strom beaufschlagt, wenn die notwendige Schaltspannung am Transistor 30 erreicht ist. Bei Erreichen dieser Schaltstelle öffnet der Transistor 30 und bestromt die weitere Erregerwicklung 24, was wiederum den Aufbau des sekundären Magnetfelds zur Folge hat. Aufgrund der bereits erläuterten Anordnung und gewählten Stromdurchfluss-Richtung durch die weitere Erregerwicklung 24, sind die Feldlinien des sekundären Magnetfelds entgegen gesetzt zu den Feldlinien des primären Magnetfelds ausgerichtet. D.h. das effektiv wirkende Erregerfeld wird abgeschwächt, so dass ein degressiver Dämpferkraftverlauf erreicht wird.

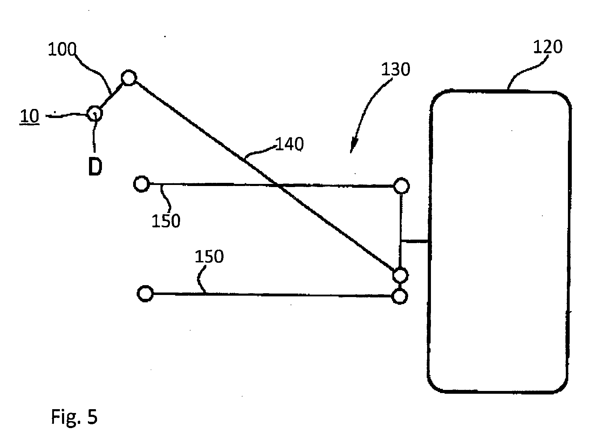

Eine mögliche Bausituation ist in Fig. 5 dargestellt. Gezeigt ist als Teil eines Kraftfahrzeugs ein Rad 120 nebst Radträger 130, an dem eine Schiebestange 140 angeordnet ist, die beispielsweise mit dem Hebelelement 100 verbunden ist. Das Hebelelement 100 ist um die Drehachse D drehbar gelagert, wobei sich in dieser Drehachse der erfindungsgemäße Dämpfer 10 befindet.

Denkbar wäre selbstverständlich auch den Dämpfer 10 unmittelbar in die Drehaufhängung eines oder beider Querlenker 150 zu integrieren. In jedem Fall wird der Stator, also das erste Getriebeelement 12, immer mit dem Antrieb verbunden, er ist das getriebene Element, während der Rotor, also das zweite Getriebeelement 14 stets das getriebene Element ist. Federt nun das Rad 120 ein oder aus, wird das Hebelelement 100 bewegt, so dass es um die Drehachse D dreht, worüber der erfindungsgemäße Dämpfer 10 in der beschriebenen Art und Weise betrieben wird.

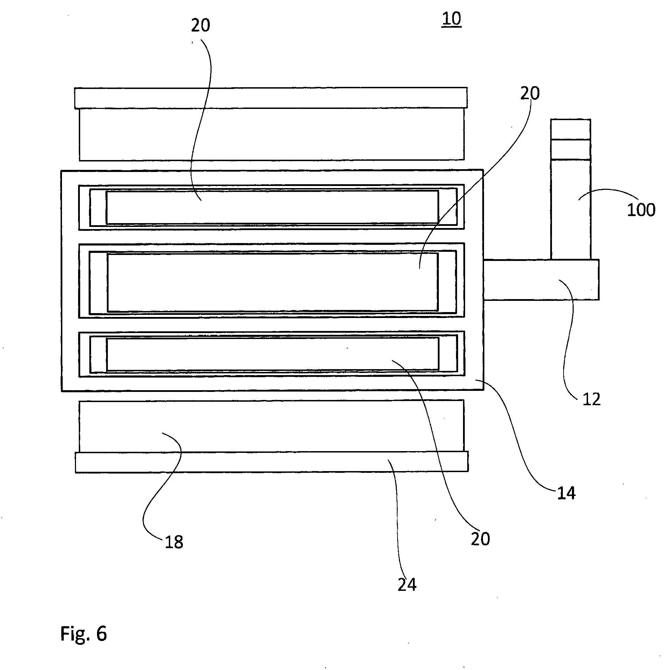

Bei dem in Fig. 6 dargestellten Dämpfer 10 ist das Hebelelement 100 unmittelbar mit dem Rotor 14 des Generators verbunden. D.h. eine Schwenkbewegung des Hebelelements 100 bewirkt eine unmittelbare Drehbewegung des Rotors 14.

Der Rotor 14 umfasst Wicklungen 20. Zudem sind außerhalb des Rotors 14 Felderzeugungsmittel 18 zur Erzeugung eines primären Magnetfelds angeordnet. Die primären Felderzeugungsmittel 18 sind vorliegend als Permanentmagnete ausgebildet. In bekannter Art und Weise wird nun durch eine Drehbewegung des Rotors in den Wicklungen 20 ein Strom induziert.

Wie Fig. 6 weiter zu entnehmen ist, ist neben den für die Induktion notwendigen primären Felderzeugungsmittel 18 zur Erzeugung des Erregermagnetfelds eine weitere Erregerwicklung 24 vorgesehen, über die ein sekundäres Magnetfeld erzeugbar ist. Die Anordnung der zusätzlichen Erregerwicklung 24 sowie die Richtung des Stromdurchflusses durch die weitere Erregerwicklung 24 sind dabei so gewählt, dass das primäre und sekundäre Magnetfeld entgegengesetzt ausgerichtete Feldlinien aufweisen.

Als Folge davon wird das effektiv wirkende Erregerfeld abgeschwächt, d.h. ein degressiver Dämpferkraftverlauf kann über die Steuerung des Stromflusses durch die weitere Erregerwicklung 24 gezielt eingestellt werden.

### Bezugszeichenliste

- 10: Dämpfer
- 12: erstes Getriebeelement/Stator
- 14: zweites Getriebeelement/Rotor
- 16: Planetenräder
- 18: Felderzeugungsmittel zur Erzeugung des primären Magnetfelds
- 20: Wicklungen/Ankerwicklungen
- 22: Anker
- 24: weitere Erregerwicklung zur Erzeugung des sekundären Magnetfelds
- 26: Generator
- 28: Klemmen
- 30: Transistor

- 100: Hebelelement
- 110: Bohrung
- 120: Rad
- 130: Radträger
- 140: Schiebestange
- 150: Querlenker

- D: Drehpunkt

## Patentansprüche

1. Elektrischer Dämpfer (10) zum Dämpfen der Relativbewegung zwischen einer ersten und einer zweiten Masse, umfassend einen durch die Massenbewegung antreibbaren Generator (26), **dadurch gekennzeichnet, dass** zusätzlich zu den im Generator (26) vorhandenen Felderzeugungsmittel (18) zur Erzeugung eines primären Magnetfelds eine weitere Erregerwicklung (24) zur Erzeugung eines sekundären Magnetfelds vorgesehen ist, wobei die weitere Erregerwicklung (24) derart angeordnet ist, dass das primäre und sekundäre Magnetfeld entgegengesetzt ausgerichtete Feldlinien aufweisen, wobei ein im Generator (26) vorhandener elektrischer Leiter zur Führung des induzierten Stroms mit der weiteren Erregerwicklung (24) derart verschaltet ist, dass erst bei Überschreiten eines vorgegebenen Schwellenwerts ein Teil des induzierten Stroms in die weitere Erregerwicklung (24) eingespeist wird.

2. Dämpfer (10) nach Patentanspruch 1, **dadurch gekennzeichnet, dass** die Felderzeugungsmittel als eine Erregerwicklung zur Fremderregung oder als permanentmagnetische Elemente zur Eigenerregung ausgebildet sind.

3. Dämpfer (10) nach einem der vorgenannten Ansprüche, **dadurch gekennzeichnet, dass** der Generator (26) in einem Getriebe integriert ist.

4. Dämpfer (10) nach Anspruch 3, **dadurch gekennzeichnet, dass** das Getriebe als ein Spannungswellengetriebe ausgebildet ist.

5. Dämpfer (10) nach Anspruch 3, **dadurch gekennzeichnet, dass** das Getriebe als ein Planetengetriebe ausgebildet ist.

6. Dämpfer (10) nach Anspruch 3, **dadurch gekennzeichnet, dass** das Getriebe als ein Zykloidgetriebe ausgebildet ist.

## Claims

1. Electric damper (10) for damping the relative motion between a first and a second mass, comprising a generator (26) driven by the motion, **characterized in that** in addition to a field generating means (18) provided in the generator (26) for generating a primary magnetic field, an additional field winding (24) is provided for generating a secondary magnetic field, wherein the additional field winding (24) is arranged such that the primary and secondary magnetic field have field lines oriented in opposite directions, wherein an electrical conductor provided in the generator (26) for conducting the induced current is connected to the additional field winding (24) such that a portion of the induced current is fed into the additional field winding (24) only when a predetermined threshold has been exceeded.

2. Electric damper (10) according to claim 1, **characterized in that** the field generating means are configured as a field winding for separate excitation or as permanent magnetic elements for self-excitation.

3. Electric damper (10) according to any of the preceding claims, **characterized in that** the generator (26) is integrated in a gearbox.

4. Electric damper (10) according to claim 3, **characterized in that** the gearbox is constructed as a strain wave gear.

5. Electric damper (10) according to claim 3, **characterized in that** the gearbox is constructed as a planetary gear.

6. Electric damper (10) according to claim 3, **characterized in that** the gearbox is constructed as a cycloidal gear.

## Revendications

1. Amortisseur (10) électrique servant à amortir le déplacement relatif entre une première masse et une deuxième masse, comprenant un générateur (26) pouvant être entraîné par le déplacement de masse, **caractérisé en ce qu'**est prévu, en plus des moyens de production de champs (18) présents dans le générateur (26) servant à produire un champ magnétique primaire, un enroulement d'excitation (24) supplémentaire servant à produire un champ magnétique secondaire, dans lequel l'enroulement d'excitation (24) supplémentaire est disposé de telle manière que le champ magnétique primaire et le champ magnétique secondaire présentent des lignes caractéristiques de champ à orientation opposée, dans lequel un conducteur électrique présent dans le générateur (26) servant à conduire le courant induit peut être câblé à l'enroulement d'excitation (24) supplémentaire de telle manière qu'une partie du courant induit est injectée seulement en cas de dépassement d'une valeur de seuil prédéfinie, dans l'enroulement d'excitation (24) supplémentaire.

2. Amortisseur (10) selon la revendication 1, **caractérisé en ce que** les moyens de production de champs sont réalisés sous la forme d'un enroulement d'excitation servant à l'excitation de champs ou sous la forme d'éléments à aimants permanents servant à la propre excitation.

3. Amortisseur (10) selon l'une quelconque des revendications précédentes, **caractérisé en ce que** le générateur (26) est intégré dans une transmission.

4. Amortisseur (10) selon la revendication 3, **caractérisé en ce que** la transmission est réalisée sous la forme d'une transmission à ondes de tension.

5. Amortisseur (10) selon la revendication 3, **caractérisée en ce que** la transmission est réalisée sous la forme d'une transmission épicycloidale.

6. Amortisseur (10) selon la revendication 3, **caractérisé en ce que** la transmission est réalisée sous la forme d'une transmission cycloïdale.
